# EUROPÄISCHE PATENTSCHRIFT

(11) **EP 1 518 719 B1**
(45) Veröffentlichungstag und Bekanntmachung des Hinweises auf die Patenterteilung: **27.09.2006**
(21) Anmeldenummer: 04077439.0
(22) Anmeldetag: 27.08.2004
(51) Int. Cl.: B60C 27/04

(54) **Gleitschutzvorrichtung**
Anti-skid chain
Chaîne antidérapante

(30) Priorität: 26.09.2003 DE 20315350 U
(43) Veröffentlichungstag der Anmeldung: 30.03.2005
(73) Patentinhaber: RUD-Kettenfabrik Rieger & Dietz GmbH u. Co., 73432 Aalen-Unterkochen (DE)
(72) Erfinder: Kess, Leo, 73432 Aalen-Ebnat (DE)
(74) Vertreter: Grünecker, Kinkeldey, Stockmair & Schwanhäusser Anwaltssozietät

(56) Entgegenhaltungen:
- DE-C- 759 575
- DE-C- 944 533
- US-A- 1 917 161
- US-A- 2 414 067

## Beschreibung

Die Erfindung betrifft eine Gleitschutzvorrichtung für Fahrzeuge mit an ihrer Außenseite Querstollen aufweisenden Laufbändern.

Aus der US-A-1917161 ist eine Gleitschutzvorrichtung mit zwei quer über die Lauffläche eines Fahrzeugreifens laufende Kettenstränge bekannt, die wiederum an einem innerem und äußerem Befestigungsstrang befestigt sind. Diese zwei Kettenstränge sind durch mehrere Kettenstrangabschnitte miteinander verbunden und bilden einen Abschnitt einer Traktionshilfe. Diese Gleitschutzvorrichtung wird an Fahrzeugreifen montiert, eine Montage auf einem Laufband gemäß der vorliegenden Erfindung ist nicht möglich.

Fahrzeuge mit Laufbändern haben aufgrund ihrer vergleichsweise großen Bodenberührungsfläche einen relativ geringen Bodendruck, der es ihnen erlaubt, sich auf Böden mit geringer Tragfähigkeit ohne einzusinken zu bewegen. Der geringe Bodendruck erweist sich allerdings als problematisch und gefährlich, wenn sich beispielsweise auf einer Fahrbahn sogenanntes Blitzeis infolge von Regen auf frostigem Boden bildet oder wenn eine festgefahrene Schneedecke vorhanden ist. In derartigen Fällen ist keine Gewähr mehr für einen ausreichenden Formschluss bzw. Fahrbahnkontakt zwischen den Laufbändern und dem Gelände gegeben und insbesondere beim Befahren von Steigungen und Kehren gehen Vortrieb, Seitenführung sowie Lenk- und Bremsverhalten des Fahrzeuges mehr oder weniger stark verloren. Im Grenzfall rutscht das Fahrzeug an Steigungen mit vorwärtsdrehenden Laufbänder unter Verlust der Bodenhaftung rückwärts eine Steigung herunter. Es wird so manövrierunfähig und kippt u. U. bei zunehmender Geschwindigkeit und Auftreffen auf Schneeränder oder Fahrbahnbegrenzungen um, wobei die auftretenden Schäden vor allem bei Tandem-Systemen infolge eines Wegdrehens des gezogenen Wagens regelmäßig beträchtlich sind.

Der Erfindung liegt die Aufgabe zugrunde, der geschilderten Problematik entgegenzuwirken und die aus dem geringen Bodendruck von Fahrzeugen mit Laufbändern resultierenden Gefahren drastisch zu reduzieren. Gelöst wird die gestellte Aufgabe erfindungsgemäß durch auf die Laufbänder applizierbare Gleitschutzvorrichtungen, die zwei beidseits der Querstollen des jeweiligen Laufbandes zu liegen kommende Kettenstränge aufweisen, die durch mehrere die Querstollen überbrückende Kettenstrangabschnitte miteinander verbunden und an ihren Enden mit zu ihrer Befestigung an den Laufbänder dienenden Haltevorrichtungen versehen sind.

Mit Hilfe von erfindungsgemäßen Gleitschutzvorrichtungen lässt sich die Griffigkeit und somit die Bodenhaftung von Laufbändern in einem Maße verbessern, das ein einwandfreies Traktions-, Lenk- und Bremsverhalten gewährleistet. Dabei genügt es in aller Regel, wenn beide Trums des jeweiligen Laufbandes mit drei bis vier Gleitschutzvorrichtungen ausgestattet werden.

Weitere Merkmale und Einzelheiten der Erfindung ergeben sich aus den Unteransprüchen und der nachstehenden Beschreibung einer in den beigefügten Zeichnungen dargestellten Ausführungsform der Erfindung. Es zeigen:
- Fig. 1: die Seitenansicht einer Gleitschutzvorrichtung, bei der aus Gründen der Übersichtlichkeit senkrecht zur Blattebene verlaufende Kettenstrangabschnitte weggelassen sind,
- Fig. 2: die Draufsicht auf die Gleitschutzvorrichtung gemäß Fig. 1, bei der die quer zur Längsrichtung der Vorrichtung verlaufenden Kettenstrangabschnitte aus Gründen der Übersichtlichkeit vom Rest der Vorrichtung getrennt dargestellt sind,
- Fig. 3: die Seitenansicht einer der beiden Haltevorrichtungen der Gleitschutzvorrichtung gemäß den Figuren 1 und 2 in vergrößertem Maßstab,
- Fig. 4: die Rückansicht der Haltevorrichtung gemäß Fig. 3,
- Fig. 5: eine Draufsicht auf die Haltevorrichtung gemäß Fig. 4 und 5,
- Fig. 6: die Seitenansicht der zweiten Haltevorrichtung der Gleitschutzvorrichtung gemäß der Figuren 1 und 2 in vergrößertem Maßstab,
- Fig. 7: die Rückansicht der Haltevorrichtung gemäß Fig. 6 und
- Fig. 8: eine Draufsicht auf die Haltevorrichtung gemäß Fig. 6 und 7.

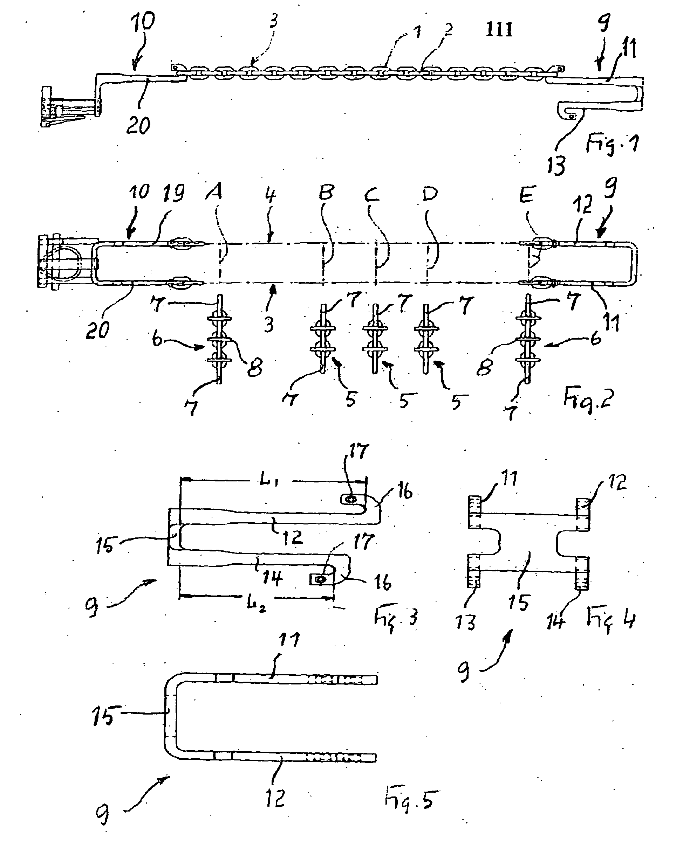

Die in Figur 1 und 2 dargestellte, als Traktionshilfe für Fahrzeuge mit Laufbändern dienende Gleitschutzvorrichtung weist zwei im wesentlichen parallel zueinander verlaufende, aus horizontalen und vertikalen Rundstahlgliedern 1, 2 bestehende Kettenstränge 3 und 4 auf, die an den Stellen A, B, C, D und E durch mehrere kurze Kettenstrangabschnitte 5 und 6 unterschiedlicher Länge miteinander verbunden sind, wobei diese Längen jeweils größer als der Abstand zwischen den Kettensträngen 3 und 4 in deren in Fig. 2 dargestellter gestreckter Lage sind. Zum Verbinden der Kettenstrangabschnitte 5 und 6 mit den Kettensträngen dienen ovale Vertikalglieder 7, die an den Stellen A bis E jeweils beide Schenkel jeweils eines Horizontalgliedes 2 der Kettenstränge 3 und 4 umgreifen. 8 sind auf den Horizontalgliedern der Kettenstrangabschnitte 5 und 6 angeordnete Verschleißglieder.

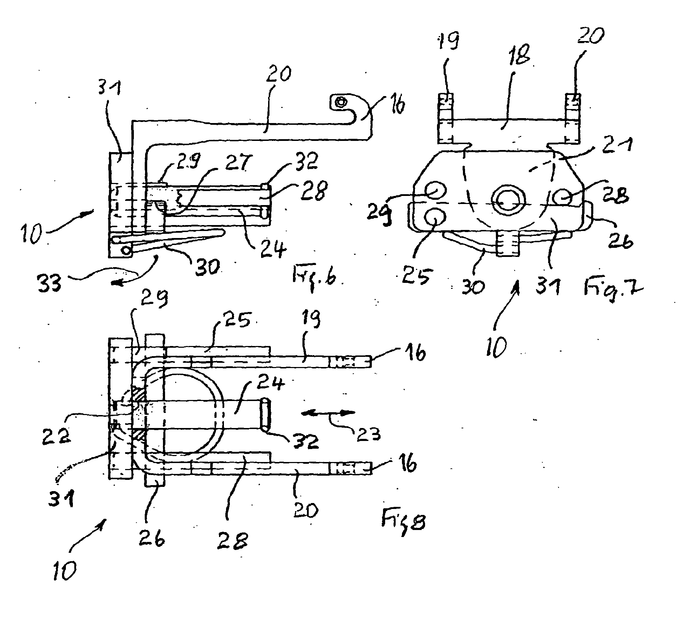

Die Enden der Kettenstränge 3 und 4 sind mit zwei Haltevorrichtungen 9 und 10 verbunden, deren Aufbau anhand der Figuren 3 bis 8 näher erläutert wird.

Die in den Figuren 3 bis 5 dargestellte Haltevorrichtung 9 weist vier paarweise angeordnete Haltearme 11, 12, 13 und 14 auf, die über ein Joch 15 miteinander verbunden sind. Die Enden sämtlicher Haltearme 11 bis 14 sind als Haken 16 ausgebildet, in die jeweils ein Endglied der Kettenstränge 3 und 4 eingehängt und durch Spannstifte 17 gesichert werden kann. Wie aus Fig. 3 ersichtlich, haben die Haltearme 11 und 12 eine größere Länge L₁ als die Haltearme 13 und 14, deren Länge L₂ beträgt. Die unterschiedlichen Längen L₁ und L₂ machen es möglich, in gewissen Grenzen eine verschleißbedingte Längung der Kettenstränge 3 und 4 zu kompensieren, indem man ihre Endglieder aus den Haken 16 der Haltearme 11 und 12 aushängt und sie nach Drehung der Haltevorrichtung 9 um 180° in die Haken 16 der Haltearme 13 und 14 einhängt.

Die in den Figuren 6 bis 8 dargestellte Haltevorrichtung 10 weist ebenfalls zwei über ein Joch 18 miteinander verbundene Haltearme 19, 20 mit als Haken 16 ausgebildeten Enden auf. An das Joch 18 schließt sich ein Ausleger 21 an, der mit einer Bohrung 22 für ein gegenüber dem Joch 18 in Richtung des Doppelpfeiles 23 hin- und herverschiebbares, als Bolzen ausgebildetes Schließelement 24 versehen ist. Das Schließelement 24 ist den Figuren 6 und 8 in seiner rechten Endlage, d. h. in seiner Schließposition dargestellt, in der ein auf einem Bolzen 25 gelagerter Verriegelungshebel 26 in eine quer zur Längsachse des Schließelementes 24 verlaufende Rastnut 27 des das Schließelement 24 bildenden Bolzens greift. Die Schwenkbewegungen des Verriegelungshebels 26 werden durch zwei zusätzliche Bolzen 28 und 29 begrenzt, von denen der Bolzen 28 wesentlich länger als der Bolzen 29 ist. Zur Arretierung des Verriegelungshebels 26 in der gezeigten Lage dient ein umklappbarer, offener Federstahlring 30, dessen zur Erzeugung eines Federeffektes um einen gewissen Betrag zueinander versetzte Enden an einem Träger 31 befestigt sind, mit dem auch das Schließelement 24 und die Bolzen 25, 28, 29 verbunden sind. Um ein Herausziehen des Schließelementes 24 aus der Bohrung 22 des Auslegers 21 des Joches 18 zu verhindern, ist am dem Träger 31 abgewandten Ende des bolzenförmigen Schließelementes 24 ein Sprengring 32 angebracht.

Beim Montieren der Gleitschutzvorrichtung werden zunächst die Haltearme 11 bis 14 über und unter den einen Rand des Laufbandes geschoben, wobei ein Querstollen des Laufbandes zwischen den oberen Armen 12 und 14 zu liegen kommt. Die aus den Teilen 24, 25, 26, 28, 29, 30 und 31 bestehende Schließvorrichtung wird nach Umklappen des Federstahlringes 30 in Richtung des Pfeiles 33 geöffnet, so dass der Träger 31 zusammen mit den mit ihm verbundenen Teilen in Fig. 6 soweit nach links verschoben werden kann, bis der Sprengring 32 des Schließelementes 24 gegen den Ausleger 21 des die Haltearme 19, 20 miteinander verbindenden Joches 18 anschlägt. In dieser Position können die Haltearme 19, 20 an der Außenseite des Haltebandes in eine Position überführt werden, in der sie wie die Haltearme 11, 12 beidseits eines Querstollens zu liegen kommen. Anschließend wird das Schließelement 24 auf der den Haltearmen 19, 20 abgewandten Seite des Laufbandes in die in den Figuren 6 bis 8 dargestellte Lage zurückgeschoben und nach Einlegen des Verriegelungshebels 26 in die Rastnut 27 der Federstahlring 30 in die Sperrstellung zurückgeklappt.

## Patentansprüche

1. Gleitschutzvorrichtung für Fahrzeuge mit Laufbändern, die an ihrer Außenseite Querstollen aufweisen, **dadurch gekennzeichnet, dass** sie beidseits eines Querstollens auf dem Laufband endende, durch den Querstollen überbrückende Kettenstrangabschnitte (5, 6) miteinander verbundene Kettenstränge (3, 4) aufweist und **dass** die Enden dieser Kettenstränge (3, 4) an jeweils zwei über ein Joch (15; 18) miteinander verbundene, auf das Laufband schiebbare Haltearme (11, 12; 19, 20) von an sich gegenüberliegenden Seiten des Laufbandes befestigbaren Haltevorrichtungen (9, 10) angeschlossen sind.

2. Gleitschutzvorrichtung nach Anspruch 1, **dadurch gekennzeichnet, dass** die am einen Ende der Kettenstränge (3, 4) angeordnete Haltevorrichtung (9) aus jeweils zwei über ein Joch (15) miteinander verbundenen Paaren von Haltearmen (11, 12; 13, 14) besteht, von denen jeweils ein Paar (11, 12 oder 13, 14) unter das Laufband schiebbar und ein Paar (13, 14 oder 11, 12) zu beiden Seiten eines Querstollens über das Laufband schiebbar ist.

3. Gleitschutzvorrichtung nach Anspruch 2, **dadurch gekennzeichnet, dass** mindestens die Enden der über das Laufband schiebbaren Haltearme als Haken (16) ausgebildet sind.

4. Gleitschutzvorrichtung nach Anspruch 2, **dadurch gekennzeichnet, dass** auch die Enden der unter das Laufband schiebbaren Haltearme als Haken (16) ausgebildet sind.

5. Gleitschutzvorrichtung nach einem der Ansprüche 2 bis 4, **dadurch gekennzeichnet, dass** die Haltearme (11, 12) des einen Haltearmpaares länger als die Haltearme (13, 14) des anderen Haltearmpaares sind.

6. Gleitschutzvorrichtung nach einem der Ansprüche 1 bis 5, **dadurch gekennzeichnet, dass** die am anderen Ende der Kettenstränge (3, 4) angeordnete Haltevorrichtung (10) zwei zu beiden Seiten eines Querstollens über das Laufband schiebbare Haltearme (19, 20) aufweist.

7. Gleitschutzvorrichtung nach Anspruch 6, **dadurch gekennzeichnet, dass** die Enden der am anderen Ende der Kettenstränge (3, 4) angeordneten Haltearme (19, 20) als Haken (16) ausgebildet sind.

8. Gleitschutzvorrichtung nach Anspruch 6 oder 7, **dadurch gekennzeichnet, dass** die am anderen Ende der Kettenstränge (3, 4) angeordnete Haltevorrichtung (10) mit einem zur Arretierung der Gleitschutzvorrichtung am Laufband dienenden Verschlussmechanismus versehen ist.

9. Gleitschutzvorrichtung nach Anspruch 8, **dadurch gekennzeichnet, dass** der Verschlussmechanismus mindestens ein aus einer Position außerhalb des Randes des Laufbandes in eine Position unterhalb des Laufbandes verlagerbares Schließelement (24) aufweist.

10. Gleitschutzvorrichtung nach Anspruch 9, **dadurch gekennzeichnet, dass** das Schließelement (24) hin- und herverschiebbar in einer Bohrung (22) geführt ist, die in einem Ausleger (21) eines Joches (18) angeordnet ist, das die Haltearme (19, 20) der Haltevorrichtung (10) miteinander verbindet.

11. Gleitschutzvorrichtung nach Anspruch 10, **dadurch gekennzeichnet, dass** das Schließelement (24) von einem parallel zu den Haltearmen (19, 20) orientierten, von einem Träger (31) gehaltenen Bolzen gebildet wird.

12. Gleitschutzvorrichtung nach Anspruch 11, **dadurch gekennzeichnet, dass** der Bolzen (24) in einem der Stärke des Auslegers (21) des die Haltearme (19, 20) miteinander verbindenden Joches (18) entsprechenden Abstand vom Träger (31) mit einer Rastnut (27) für einen schwenkbar am Träger (31) gelagerten Verriegelungshebel (26) versehen ist.

13. Gleitschutzvorrichtung nach Anspruch 12, **dadurch gekennzeichnet, dass** der Verriegelungshebel (26) durch einen umklappbaren Federstahlring (30) in der Rastnut (27) arretierbar ist.

14. Gleitschutzvorrichtung nach Anspruch 11 bis 13, **dadurch gekennzeichnet, dass** der das Schließelement (24) bildende Bolzen zwischen zwei mit dem Träger (31) verbundenen Bolzen (25, 28) angeordnet ist, von denen einer (25) den Verriegelungshebel (26) trägt und einer (28) einen Anschlag für den Verriegelungshebel (26) bildet.

15. Gleitschutzvorrichtung nach einem der Ansprüche 1 bis 14, **dadurch gekennzeichnet, dass** die beidseits der Querstollen der Laufbänder zu liegen kommenden Kettenstränge (3, 4) aus Rundstahlgliedern bestehen.

16. Gleitschutzvorrichtung nach einem der Ansprüche 1 bis 15, **dadurch gekennzeichnet, dass** die die Querstollen der Laufbänder überbrückenden Kettenstrangabschnitte (5, 6) aus Rundstahlgliedern bestehen und **dass** ihre parallel zur Oberfläche der Laufbänder orientierten Horizontalglieder mit vertikal orientierten Verschleißgliedern (8) bestückt sind.

## Claims

1. Anti-slip device for vehicles equipped with crawler tracks, which on its outside exhibits transverse bars, **characterized in that** it exhibits on either side of a transverse bar chain strands (3, 4) connected to one another by chain strand sections (5, 6) bridging the transverse bars and terminating on the crawler track, and **in that** the ends of these chain strands (3, 4) are attached in each case to two retaining arms (11, 12; 19, 20) connected to one another via a yoke (15; 18) and capable of being pushed onto the crawler track, the retaining arms (11, 12; 19, 20) forming parts of holding devices (9, 10) that are capable of being attached on opposing sides of the crawler track.

2. Anti-slip device according to Claim 1, **characterized in that** the holding device (9) arranged at one end of the chain strands (3, 4) in each case consists of two pairs of retaining arms (11, 12; 13, 14) connected together via a yoke (15), of which one pair (11, 12 or 13, 14) in each case is capable of being pushed under the crawler track, and one pair (13, 14 or 11, 12) is capable of being pushed over the crawler track on both sides of a transverse bar.

3. Anti-slip device according to Claim 2, **characterized in that** at least the ends of the retaining arms that are capable of being pushed over the crawler track are embodied as hooks (16).

4. Anti-slip device according to Claim 2, **characterized in that** the ends of the retaining arms that are capable of being pushed under the crawler track are also executed as hooks (16).

5. Anti-slip device according to one of Claims 2 to 4, **characterized in that** the retaining arms (11, 12) of one of the pairs of retaining arms are longer than the retaining arms (13, 14) of the other pair of retaining arms.

6. Anti-slip device according to one of Claims 1 to 5, **characterized in that** the holding device (10) arranged at the other end of the chain strands (3, 4) exhibits two retaining arms (19, 20) that are capable of being pushed over the crawler track on both sides of a transverse bar.

7. Anti-slip device according to Claim 6, **characterized in that** the ends of the retaining arms (19, 20) arranged at the other end of the chain strands (3, 4) are embodied as hooks (16).

8. Anti-slip device according to Claims 6 or 7, **characterized in that** the retaining device (10) arranged at the other end of the chain strands (3, 4) is provided with a locking mechanism serving to fix the anti-slip device to the crawler track.

9. Anti-slip device according to Claim 8, **characterized in that** the locking mechanism exhibits at least one fastening element (24) that is capable of being displaced from a position outside the edge of the crawler track and into a position underneath the crawler track.

10. Anti-slip device according to Claim 9, **characterized in that** the fastening element (24) is guided in such a way that it is capable of being displaced back and forth inside a drilled hole (22), which is arranged in an arm (21) of a yoke (18) connecting the retaining arms (19, 20) of the retaining device (10) to one another.

11. Anti-slip device according to Claim 10, **characterized in that** the fastening element (24) is formed by a bolt aligned in parallel with the retaining arms (19, 20) and held by a carrier (31).

12. Anti-slip device according to Claim 11, **characterized in that** the bolt (24) is provided, at a distance from the carrier (31) corresponding to the size of the arm (21) of the yoke (18) which connects the retaining arms (19, 20) to one another, with an engagement slot (27) for a locking lever (26) pivotally mounted on the carrier (31).

13. Anti-slip device according to Claim 12, **characterized in that** the locking lever (26) is capable of being fixed in the engagement slot (27) by a folding spring steel ring (30).

14. Anti-slip device according to Claims 11 to 13, **characterized in that** the bolt constituting the fastening element (24) is arranged between two bolts (25, 28) connected to the carrier (31), of which one (25) supports the locking lever (26) and one (28) constitutes a stop for the locking lever (26).

15. Anti-slip device according to Claims 1 to 14, **characterized in that** the chain strands (3, 4) which eventually lie to either side of the transverse bars of the crawler tracks consist of round steel links.

16. Anti-slip device according to Claims 1 to 15, **characterized in that** the sections (5, 6) of the chain strands which bridge the transverse bars of the crawler tracks consist of round steel links, and **in that** their horizontal links oriented parallel with the surface of the crawler tracks are equipped with vertically oriented wearing links (8).

## Revendications

1. Dispositif anti-patinage pour des véhicules équipés de bandes de roulement présentant des barrettes transversales sur leur côté extérieur, **caractérisé en ce que** qu'il présente des tronçons de chaîne (3, 4) aboutissant de part et d'autre d'une barrette transversale sur la bande de roulement, reliés l'un à l'autre par des segments de tronçon de chaîne (5, 6) passant par-dessus les barrettes transversale, et **en ce que** les extrémités de ces tronçons de chaîne (3, 4) sont raccordées chacune à deux bras de retenue (11, 12 ; 19, 20) de dispositifs de retenue (9, 10) pouvant être fixés sur les côtés opposés l'un à l'autre de la bande de roulement, lesdits bras de retenue étant reliés l'un à l'autre par une traverse (15 ; 18) et pouvant être glissés sur la bande de roulement.

2. Dispositif anti-patinage selon la revendication 1, **caractérisé en ce que** le dispositif de retenue (9) disposé à une extrémité du tronçon de chaîne (3, 4) est constitué de deux paires de bras de retenue (11, 12 ; 13, 14) reliées l'une à l'autre par une traverse (15), dont une paire (11, 12 ou 13, 14) peut être glissée au-dessous de la bande de roulement et une paire (13, 14 ou 11, 12) peut être glissée des deux côtés d'une barrette transversale au-dessus de la bande de roulement.

3. Dispositif anti-patinage selon la revendication 2, **caractérisé en ce qu'**au moins les extrémités des bras de retenue pouvant être glissés au-dessus de la bande de roulement sont réalisés sous la forme de crochets (16).

4. Dispositif anti-patinage selon la revendication 2, **caractérisé en ce que** les extrémités des bras de retenue pouvant être glissés au-dessous de la bande de roulement sont également réalisées sous la forme de crochets (16).

5. Dispositif anti-patinage selon une des revendications 2 à 4, **caractérisé en ce que** les bras de retenue (11, 12) d'une paire de bras de retenue sont plus longs que les bras de retenue (13, 14) de l'autre paire de bras de retenue.

6. Dispositif anti-patinage selon une des revendications 1 à 5, **caractérisé en ce que** le dispositif de retenue (10) disposé à l'autre extrémité du tronçon de chaîne (3, 4) présente deux bras de retenue (19, 20) pouvant être placés de part et d'autre d'une barrette transversale au-dessus de la bande de roulement.

7. Dispositif anti-patinage selon la revendication 6, **caractérisé en ce que** les extrémités des bras de retenue (19, 20) disposés à l'autre extrémité du tronçon de chaîne (3, 4) sont réalisées sous la forme de crochets (16).

8. Dispositif anti-patinage selon la revendication 6 ou 7, **caractérisé en ce que** le dispositif de retenue (10) disposé à l'autre extrémité du tronçon de chaîne (3, 4) est muni d'un mécanisme de verouillage servant au blocage du dispositif anti-patinage sur la bande de roulement.

9. Dispositif anti-patinage selon la revendication 8, **caractérisé en ce que** le mécanisme de verrouillage présente au moins un élément de fermeture (24) pouvant être déplacé d'une position à l'extérieur du bord de la bande de roulement à une position au-dessous de la bande de roulement.

10. Dispositif anti-patinage selon la revendication 9, **caractérisé en ce que** l'élément de fermeture (24) et guidé en va-et-vient dans un alésage (22) qui est disposé dans une équerre (21) d'une traverse (18) qui relie l'un à l'autre les bras de retenue (19, 20) du dispositif de retenue (10).

11. Dispositif anti-patinage selon la revendication 10, **caractérisé en ce que** l'élément de fermeture (24) est formé par un boulon orienté parallèlement aux bras de retenue (19, 20), maintenu par un support (31).

12. Dispositif anti-patinage selon la revendication 11, **caractérisé en ce que** le boulon (24) est muni à une distance du support (31) correspondant à l'épaisseur de l'équerre (21) de la traverse (18) reliant l'un à l'autre les bras de support (19, 20) d'une rainure d'arrêt (27) destinée à un levier de verrouillage (26) monté sur le support (31) de manière à pouvoir pivoter.

13. Dispositif anti-patinage selon la revendication 12, **caractérisé en ce que** le levier de verrouillage (26) peut être bloqué dans la rainure d'arrêt (27) par une rondelle en acier élastique (30) rabattable.

14. Dispositif anti-patinage selon les revendications 11 à 13, **caractérisé en ce que** le boulon formant l'élément de fermeture (24) est disposé entre deux boulons (25, 28) reliés au support (31), dont l'un (25) porte le levier de verrouillage (26) et l'autre (28) forme une butée pour le levier de verrouillage (26).

15. Dispositif anti-patinage selon une des revendications 1 à 14, **caractérisé en ce que** les tronçons de chaîne (3, 4) venant se placer de part et d'autre des barrettes transversales des bandes de roulement sont constitués de maillons an acier ronds.

16. Dispositif anti-patinage selon une des revendications 1 à 15, **caractérisé en ce que** les segments de tronçon de chaîne (5, 6) passant par-dessus les barrettes transversales des bandes de roulement sont constitués de maillons d'acier ronds, et **en ce que** leurs maillons horizontaux orientés parallèlement à la surface des bandes de roulement sont équipés de maillons d'usure (8) orientés verticalement.
